**Europäisches Patentamt**

**European Patent Office**

**Office européen des brevets**

(11) Veröffentlichungsnummer: **0 119 447**
A2

# EUROPÄISCHE PATENTANMELDUNG

(21) Anmeldenummer: **84101378.2**

(22) Anmeldetag: **10.02.84**

(51) Int. Cl.³: **B 01 F 3/12**

(30) Priorität: **22.02.83 DE 3306071**

(43) Veröffentlichungstag der Anmeldung: **26.09.84**
**Patentblatt 84/39**

(84) Benannte Vertragsstaaten: **AT BE CH DE FR GB IT LI LU NL SE**

(71) Anmelder: **Hacheney, Wilfried, Am Königsberg 15, D-4930 Detmold (DE)**

(72) Erfinder: **Hacheney, Wilfried, Am Königsberg 15, D-4930 Detmold (DE)**

(74) Vertreter: **Stracke, Alexander, Dipl.-Ing. et al, Patentanwälte Dipl.-Ing. Loesenbeck Dipl.-Ing. Stracke Jöllenbecker Strasse 164 Postfach 5605, D-4800 Bielefeld 1 (DE)**

(54) Vorrichtung zum Herstellen hochwertiger Feststoff-Flüssigkeits-Gemische.

(57) Die Vorrichtung kann z. B. zur Wasseraufbereitung oder zum Einbringen von Gasen und Flüssigkeiten verwendet werden und ist mit einem Aufnahmebehälter (1) ausgerüstet, der mit einem motorisch antreibbaren Mischwerk (4) versehen ist. Das Mischwerk weist eine vertikale Antriebswelle (5) auf, die an ihrem unteren freien Ende diametral gegenüberliegende Mischflügel (12) trägt. Das im Aufnahmebehälter (1) zu behandelnde Feststoff-Flüssigkeits-Gemisch wird über einen Einlauftrichter (3) und durch eine Füllöffnung (2) in den Aufnahmebehälter eingeführt. Während eines ersten Teils der Aufbereitungszeit des Feststoff-Flüssigkeit-Gemisches laufen die Mischelemente mit einer Umfangsgeschwindigkeit im Bereich von 60 bis 500 m/sec um. Es ist eine Steuereinrichtung vorgesehen, durch die die Umfangsgeschwindigkeit der Mischelemente in Abhängigkeit von der Viskosität des Feststoff-Flüssigkeit-Gemisches bis auf einen Mindestwert verringert wird. Dieser Mindestwert der Umfangsgeschwindigkeit kann im Bereich von 20 bis 60 m/sec liegen und wird bis zum Ende der Aufbereitungszeit konstantgehalten.

Die Vorrichtung kann in einem diskontinuierlichen und in einem kontinuierlichen Betrieb betrieben werden. Im letzteren Fall wird die schwerere Phase der Charge mittels einer Pumpe (16) in eine Entnahmeleitung (18) gefördert,

(Fortsetzung nächste Seite)

ACTORUM AG

während die leichte Phase über die Rückführungsleitung (19) wieder in den Aufnahmebehälter (1) gelangt, in dem dann eine Menge eines Feststoff-Flüssigkeit-Gemisches eingeführt wird.

1

4/S

Wilfried Hacheney, Am Königsberg 15, 4930 Detmold

"Vorrichtung zum Herstellen hochwertiger Feststoff-Flüssig-
keits-Gemische"

-------

Die Erfindung bezieht sich auf eine Vorrichtung zum Herstellen hochwertiger Feststoff-Flüssigkeits-Gemische bis
zum kolloiden System, zur Wasseraufbereitung oder zum Einbringen von Gasen und Flüssigkeiten, mit einem mit einem
motorisch antreibbaren Mischwert ausgerüsteten Aufnahmebehälter für das Gemisch,wobei das Mischwerk eine mit Mischelementen versehene Antriebswelle aufweist.

Um zu kolloiden Systemen zu gelangen, werden in der Pharma-
und Lebensmittelindustrie Kolloidatoren verwendet, deren
Mischwerk mit mittleren Geschwindigkeiten umläuft, um die
in den Kolloidator eingegebenen Stoffe unter Hinzufügung
von chemischen Steuerprodukten zu einem kolloiden System
zu verbinden. Durch die Mischung werden lediglich Kontaktvoraussetzungen geschaffen, um chemische Prozesse einzuleiten, die dann das kolloide System bilden.

Die Überführung eines Feststoff-Flüssigkeits-Gemisches in
ein kolloides System kann auch mit rein mechanisch-physikalischen Mitteln erreicht werden.

Es sind Kolloidatoren bekannt, die mit Propeller oder Tellerscheiben ausgerüstet sind, oder ein anderes Mischwerk aufweisen, das angetrieben wird und mit hohen Umfangsgeschwindigkeiten umläuft. Von diesem Mischwerk werden den mineralischen
oder organischen Stoffen der Mischung hohe Beschleunigungen
aufgegeben, die zusammen mit der Reibung der Stoffe untereinander zu einer Zerkleinerung dieser Stoffe führen.

Bei den bekannten Kolloidatoren wird nach einer Vormischung
das Mischwerk mit hohen Umfangsgeschwindigkeiten gefahren,
die über die gesamte Aufbereitungszeit konstant gehalten
werden.

Da sich während der Aufbereitungszeit die Viskosität der
Mischung erhöht, findet ein entsprechend großer Verschleiß
der Mischwerkzeuge statt.

Die Durchführung der Aufbereitung des Feststoff-Flüssigkeits-Gemisches mit einem Mischwerk, das mit konstanter,
hoher Drehzahl umläuft, führt, wie die Praxis zeigt, zu
einer langen Aufbereitungszeit bis zur Gewinnung des
kolloiden Systems.

Der Erfindung liegt die Aufgabe zugrunde, eine Vorrichtung
der eingangs genannten Art so zu gestalten, daß die Aufbereitungszeit des Feststoff-Flüssigkeits-Gemisches für
die Erzeugung des kolloiden Systems wesentlich herabgesetzt
wird.

Nach der Erfindung wird diese Aufgabe dadurch gelöst, daß
die Mischelemente während eines ersten Teils der Aufbereitungszeit des Feststoff-Flüssigkeits-Gemisches mit einer
Umfangsgeschwindigkeit im Bereich von 60 bis 500 m/sec
umlaufen und eine Steuereinrichtung vorgesehen ist, durch
die die Umfangsgeschwindigkeit der Mischelemente in Abhängigkeit von der Viskosität des Feststoff-Flüssigkeits-Gemisches bis auf einen Mindestwert verringerbar ist.
Dieser Mindestwert der Umfangsgeschwindigkeit der Mischelemente wird bis zum Ende der Aufbereitungszeit konstant
gehalten.

Im ersten Teil der Aufbereitungszeit, in dem das Feststoff-
Flüssigkeits-Gemisch eine geringe Viskosität aufweist,
läuft das Mischwerk mit hohen Umfangsgeschwindigkeiten um,
die dann in Abhängigkeit von der sich erhöhenden Viskosität
des Gemisches heruntergefahren werden. Durch diese Anpassung
der Umfangsgeschwindigkeit des Mischwerks an die Viskosität
des Feststoff-Flüssigkeits-Gemisches erfolgt eine schonende
Behandlung des Mischwerkes. Es kommt hinzu, daß die gesamte
Aufbereitungszeit hierdurch wesentlich verringert werden
kann, so daß die Leistung der Vorrichtung erhöht und der
Verbrauch an Antriebsenergie herabgesetzt wird.

In dem ersten Teil der Aufbereitungszeit werden den Feststoffteilchen von den Mischwerkzeugen hohe Beschleunigungen aufgegeben, die zur Zerkleinerung der Feststoffe führen,
die dann fortgesetzt wird durch die Zerreibung der Feststoffpartikel im Zusammenwirken miteinander. Dieser Zerreibungseffekt, der im ersten Teil der Aufbereitungszeit
durch hohe Umfangsgeschwindigkeiten der Mischwerkzeuge
erreicht wird, wird später durch eine Mindestgeschwindigkeit
dieser Mischwerkzeuge im dichter werdenden Feststoff-Flüssigkeits-Gemisch fortgesetzt.

Mit diesen Maßnahmen werden Feinstteile zerlegt, wie z.B.
Pflanzensamen, Viren oder Kokken, sofern mit der Vorrichtung eine Schlammaufbereitung durchgeführt wird.

Das Kornmaß der Feststoffpartikel wird auf 5 my oder weniger heruntergefahren.

Die Vorrichtung kann für Schlammgemische mineralischer und organischer Art, für Gesteinsgemische zum Zwecke der Hervorbringung latent-hydraulischer Eigenschaften und für Steinguß und für hydro-keramische Produktionsziele verwendet werden, wobei unter Hydro-Keramik die Erstellung von Werkstoffen auf rein mineralischer Grundlage mit keramischen Eigenschaften gemeint ist.

Auch in der Eisen- und Stahlindustrie, im Falle der Stahlbehandlung zur Erwirkung von teilweisen und vollständigen amorphen Stahl- oder Eisengebilden, kann die Vorrichtung eingesetzt werden.

Es hat sich als vorteilhaft erwiesen, im ersten Teil der Aufbereitungszeit des Feststoff-Flüssigkeits-Gemisches die
Mischelemente mit einer Umfangsgeschwindigkeit von 80 bis
160 m/sec oder von 200 bis 500 m/sec umlaufen zu lassen, die
Umfangsgeschwindigkeit im zweiten Teil der Aufbereitungszeit
auf 20 bis 60 m/sec herunterzufahren und dann bis zum Ende
der Aufbereitungszeit diese Umfangsgeschwindigkeit konstant
zu halten.

Mit der Vorrichtung kann im diskontinuierlichen Betrieb gearbeitet werden. In diesem Fall wird eine Charge eines Feststoff-Flüssigkeits-Gemisches in den Aufnahmebehälter eingegeben, bis zur Erstellung des kolloiden Systems behandelt,
und dann wird die Charge aus dem Aufnahmebehälter abgezogen.

Die Vorrichtung bietet jedoch auch die Möglichkeit, nur einen
Teil der behandelten Charge aus dem Aufnahmebehälter zu entnehmen und den Restteil über eine Rückführungsleitung in den
Aufnahmebehälter zu fördern, dem gleichzeitig eine Menge
eines neuen Feststoff-Flüssigkeits-Gemisches zugeführt wird.
Dieser Prozeß kann kontinuierlich ablaufen,wobei jeweils die
schwerere Phase der in dem Aufnahmebehälter behandelten Charge
aus dem Prozeß entnommen wird.

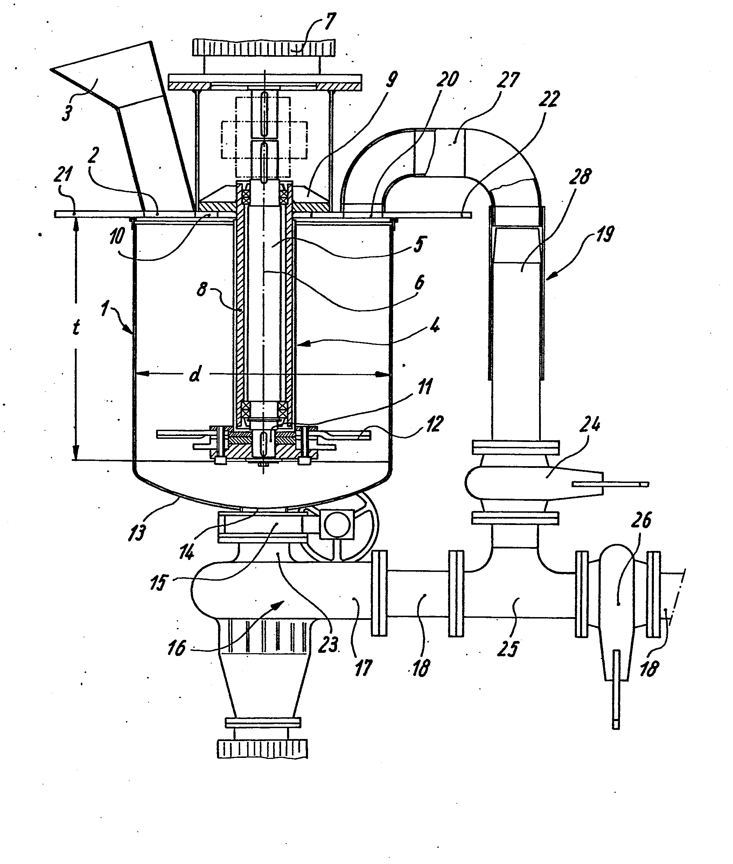

Ein Ausführungsbeispiel der Vorrichtung ist in der Zeichnung dargestellt und wird im folgenden beschrieben.
Die Vorrichtung weist einen Aufnahmebehälter 1 auf, der ortsfest angeordnet und mit einer Füllöffnung 2 versehen ist. Durch diese Füllöffnung wird das zu behandelnde Feststoff-Flüssigkeits-Gemisch über einen Einlauftrichter 3 zugeführt. Im Innenraum des Aufnahmebehälters 1 ist ein Mischwerk 4 vorgesehen, dessen Antriebswelle 5 um eine vertikale Achse 6 drehbar gelagert ist und durch einen Motor 7 angetrieben wird. Die Welle 5 ist am oberen und am unteren Ende in einem ortsfesten Rohr 8 drehbar gelagert, wobei das Rohr 8 an einem Ringflansch 9 befestigt ist, der am Deckel 10 des Aufnahmebehälters festgelegt ist. An dem unteren Zapfen 11 der Antriebswelle sind zwei diametral gegenüberliegende Mischflügel 12 befestigt. Das Verhältnis des Durchmessers des durch die beiden Mischflügel 12 gegebenen Mischelementes zum Durchmesser d des Aufnahmebehälters soll nicht größer als 0,7 sein.

Das Verhältnis der Eintauchtiefe t des Mischwerks zur lichten Höhe des Aufnahmebehälters 1 soll nicht größer als 0,8 sein.

Der Boden 13 des Aufnahmebehälters 1 ist mit einer Entnahmeöffnung 14 versehen, die mit einem Schieber 15 verschlossen werden kann. Dem Schieber 15 ist eine Pumpe 16 nachgeschaltet, deren Förderstutzen 17 mit einer Entnahmeleitung 18 verbunden ist. Von dieser Entnahmeleitung zweigt eine Rückführungsleitung 19 ab, die in den Aufnahmebehälter 1 im Deckelbereich einmündet. Die Füllöffnung 2 und auch die Rückführungsöffnung 20 im Deckelbereich des Aufnahmebehälters können durch Schieber 21, 22 verschlossen werden.

In dem dargestellten Ausführungsbeispiel ist der Saugstutzen 23 der Pumpe 16 an das Gehäuse des Schiebers 15 geflanscht.

0119447

In der Rückführungsleitung 19 ist benachbart der Entnahmeleitung 18 ein Absperrschieber 24 angeordnet. Die Entnahmeleitung 18 weist jenseits der Abzweigungsstelle 25 an der
dem Aufnahmebehälter 1 abgewandten Seite einen Absperrschieber 26 auf.

Die Rückführungsleitung 19 besteht aus einem oberen, bogenförmigen Rohr 27, an dem sich ein Teleskoprohr 28 anschließt.

Sofern aus dem Aufnahmebehälter 1 die gesamte Charge nach
abgeschlossener Behandlung abgezogen werden soll, werden die
Schieber 15 und 26 in die Öffnungsstellung gebracht und der
Schieber 24 geschlossen. Mittels der Pumpe 16 wird dann die
Charge aus dem Aufnahmebehälter 1 in die Entnahmeleitung 18
gefördert.

Bei einer Teilentnahme wird bei geschlossenem Schieber 24
die schwere Phase der Charge, die sich unten im Aufnahmebehälter 1 abgesetzt hat, mittels der Pumpe 16 abgezogen
und in die Entnahmeleitung 18 gedrückt. Nach dem Abtransport
der schweren Phase der Charge wird der Schieber 26 in die
Verschlußstellung gebracht, der Schieber 24 geöffnet und
die leichte Phase durch die Rückführungsleitung 19 in den
Aufnahmebehälter 1 zurückgefördert. Vor dem Einschalten des
Mischwerks 6 wird eine abgewogene Menge eines neuen Feststoff-Flüssigkeits-Gemisches über den Einlauftrichter 3 in
den Aufnahmebehälter 1 eingegeben.

Bezugszeichen
_____

1   Aufnahmebehälter
2   Füllöffnung
3   Einlauftrichter
4   Mischwerk
5   Antriebswelle
6   Achse
7   Motor
8   Rohr
9   Ringflansch
10  Deckel
11  Zapfen
12  Mischflügel
13  Boden
14  Entnahmeöffnung
15  Schieber
16  Pumpe
17  Förderstutzen
18  Entnahmeleitung
19  Rückführungsleitung
20  Rückführungsöffnung
21  Schieber
22  Schieber
23  Saugstutzen
24  Absperrschieber
25  Abzweigungsstelle
26  Absperrschieber
27  Rohr
28  Teleskoprohr

0119447

Patentansprüche

1. Vorrichtung zum Herstellen hochwertiger Feststoff-Flüssigkeitsgemische bis zum kolloiden System, zur Wasseraufbereitung oder zum Einbringen von Gasen und Flüssigkeiten mit einem mit einem motorisch antreibbaren Mischwerk ausgerüsteten Aufnahmebehälter für das Gemisch, wobei das Mischwerk eine mit Mischelementen versehene Antriebswelle aufweist, dadurch gekennzeichnet, daß die Mischelemente während eines ersten Teils der Aufbereitungszeit des Feststoff-Flüssigkeits-Gemisches mit einer Umfangsgeschwindigkeit im Bereich von 60 bis 500 m/sec umlaufen und eine Steuereinrichtung vorgesehen ist, durch die die Umfangsgeschwindigkeit der Mischelemente in Abhängigkeit von der Viskosität des Feststoff-Flüssigkeits-Gemisches bis auf einen Mindestwert verringerbar ist.

2. Vorrichtung nach Anspruch 1, dadurch gekennzeichnet, daß im ersten Teil der Aufbereitungszeit des Feststoff-Flüssigkeits-Gemisches die Mischelemente mit einer Umfangsgeschwindigkeit von 200 bis 500 m/sec umlaufen und die Umfangsgeschwindigkeit im zweiten Teil der Aufbereitungszeit auf 20 bis 60 m/sec heruntergefahren und bis zum Ende der Aufbereitungszeit konstant gehalten wird.

3. Vorrichtung nach Anspruch 1, dadurch gekennzeichnet, daß im ersten Teil der Aufbereitungszeit des Feststoff-Flüssigkeits-Gemisches die Mischelemente mit einer Umfangsgeschwindigkeit von 80 bis 160 m/sec umlaufen und die Umfangsgeschwindigkeit im zweiten Teil der Aufbereitungszeit auf 20

P 33 06 071.1                    - 2 -

bis 60 m/sec heruntergefahren und bis zum Ende der Aufbereitungszeit konstant gehalten wird.

4. Vorrichtung nach Anspruch 1,2 oder 3, dadurch gekennzeichnet, daß das Verhältnis des Durchmessers des Mischelementes zum Durchmesser d des Aufnahmebehälters (1) nicht
größer als 0,7 und das Verhältnis der Eintauchtiefe 1 des
Mischwerkes (4) zur lichten Höhe des Aufnahmebehälters (1)
nicht größer als 0,8 ist.

5. Vorrichtung, insbesondere nach Anspruch 1, dadurch gekennzeichnet, daß der Boden (13) des Aufnahmebehälters (1)
mit einer mittels eines Schiebers (15) verschließbaren Entnahmeöffnung (14) versehen und dem Schieber (15) eine Pumpe
(16) nachgeschaltet ist, deren Förderstutzen (17) mit einer
Entnahmeleitung (18) verbunden ist, von der eine in den Aufnahmebehälter einmündende Rückführungsleitung (19) abzweigt.

6. Vorrichtung nach Anspruch 5, dadurch gekennzeichnet, daß
der Saugstutzen (23) der Pumpe (16) an das Schiebergehäuse
geflanscht ist.

7. Vorrichtung nach Anspruch 5 oder 6, dadurch gekennzeichnet, daß in der Rückführungsleitung (19), benachbart der
Entnahmeleitung, ein Absperrschieber (24) vorgesehen ist und
die Entnahmeleitung jenseits der Abzweigungsstelle (25) an
der dem Aufnahmebehälter abgewandten Seite einen Absperrschieber (26) aufweist.

8. Vorrichtung nach einem der Ansprüche 5 bis 7, dadurch
gekennzeichnet, daß die Rückführungsleitung (19) in einer
Öffnung des Deckels des Aufnahmebehälters (1) endet, in dem

P 33 06 071.1                    - 3 -

ferner eine mit einem Einlauftrichter (3) verbundene Füllöffnung (2) vorgesehen ist.

9. Vorrichtung nach einem der Ansprüche 5 bis 8, dadurch
gekennzeichnet, daß die Rückführungsleitung (19) ein oberes,
bogenförmiges Rohr (27) aufweist, an dem sich ein Teleskoprohr (28) anschließt.